# EUROPEAN PATENT APPLICATION

(11) **EP 4 632 861 A1**
(43) Date of publication of application: **15.10.2025**
(21) Application number: 24169988.3
(22) Date of filing: 12.04.2024
(51) Int. Cl.: H01M 10/0565, H01M 4/38, H01M 10/054, H01M 10/0568, H01M 10/0569

(54) **MULTIVALENT METAL BATTERIES WITH FLEXIBLE GEL POLYMER ELECTROLYTE**

(71) Applicant: Karlsruher Institut für Technologie, 76131 Karlsruhe (DE)
(72) Inventor: Wang, Liping, 76131 Karlsruhe (DE); Zhao-Karger, Zhirong, 76149 Karlsruhe (DE); Fichtner, Maximilian, 76131 Karlsruhe (DE)
(74) Representative: Gille Hrabal Partnerschaftsgesellschaft mbB Patentanwälte

(57) **Abstract**

The invention relates to novel and improved multivalent metal batteries comprising a novel flexible gel polymer electrolyte. The invention further relates to novel flexible multivalent metal ion gel polymer electrolyte membranes, a process for the preparation thereof and their use in multivalent metal batteries. The novel M_{MV}-GPE membranes of the invention turned out to be particularly suitable for magnesium-based batteries and allow to provide novel and improved flexible magnesium-sulphur batteries (Mg-S batteries).

## Description

### INTRODUCTION

The invention relates to novel and improved multivalent metal batteries comprising a novel flexible gel polymer electrolyte. The invention further relates to novel flexible multivalent metal ion gel polymer electrolyte (M_{MV}-GPE) membranes, a process for the preparation thereof and their use in multivalent metal batteries. The novel M_{MV}-GPE membranes of the invention turned out to be particularly suitable for magnesium-based batteries and allow to provide novel and improved flexible magnesium-sulphur batteries (Mg-S batteries).

### BACKGROUND OF THE INVENTION

Multivalent metal batteries, which are based on the reversible insertion of Mg²⁺, Zn²⁺, Al³⁺, Ca²⁺ or hybrid ions, are considered as post-Li battery systems and therewith as an important alternative to incumbent Li-ion and emerging Lithium metal systems. Owing to their greater valency, they can provide greater energy density and storage capacity. Multivalent minerals are generally available in relatively greater abundance, possibly offering low costs and mitigate concerns over supply chain sustainability. The charge density of multivalent cations is also higher than for monovalent ions. On the other hand, achieving high ionic conductivity and reversible cycling is more challenging when using multivalent ions as charge carriers.

Among multivalent metal batteries, magnesium batteries with Mg metal anode is one of the most promising candidates, because of the merits of Mg metal in terms of high natural abundance (the 8^{th} and 3^{rd} most abundant element in the earth's crust and sea water, respectively), and ambient stability. Rechargeable magnesium (Mg) batteries (RMBs) further qualify as promising candidates for post-lithium (Li) battery systems due to their inherent safety, material sustainability, and cost-effectiveness and due to the high theoretical gravimetric and volumetric capacities (2205 mA h g-¹ and 3833 mA h mL-'). Compared to Li, Mg has a high melting point (660 °C) and is environmental friendly, which makes it easier and safer to handle during battery preparation. Additionally, the inherent nature of Mg to form a homogeneous surface during electrochemical plating eliminates the risk of dangerous dendrite growth, which is common for Li and regarded as a key issue impeding wider application of Li metal anodes in Li battery systems. Therewith, Mg batteries offer the potential for large-scale battery production. However, their practical application has been hindered by the lack of a suitable electrolyte that can ensure long battery life and cycling stability.

To take advantage of the benefits of the Mg anode, high-performance cathodes and well-suited Mg-ion electrolytes are required. With a double positive charge and an ionic radius of 0.72 Å, which is comparable to that of Li⁺ (0.76 Å), the Mg²⁺ ion has a much higher charge density, resulting in strong electrostatic interactions with the species in the electrolytes and active electrode materials. This characteristic hinders the diffusion of Mg ions into solid hosts, leading to slow solid-state diffusion kinetics in cathode structures, particularly for intercalation-type cathode materials.

In this context, conversion-type cathode materials like sulphur (S) are highly promising candidates for RMBs. The volume increase during the conversion from S to MgS is approximately 28%, which is low when compared to other conversion-type cathode materials. Moreover, sulphur has a high theoretical specific capacity (1672 mA h g⁻¹ or 3459 mA h cm-'), and the combination of a Mg anode with a S cathode can deliver a promising theoretical energy density of over 4000 Wh L⁻¹. Sulphur is also advantageous due to its low molecular weight, high natural abundance and non-toxicity, making it a cost-effective option for energy storage systems. Therefore, among Mg batteries, in particular magnesium-sulphur (Mg-S) batteries are of high interest. However, Mg-S batteries suffer the risk of formation of magnesium polysulfide intermediates that can rapidly dissolve and diffuse into the liquid electrolyte during the electrochemical processes, leading to self-discharge, rapid capacity degradation, and poor cell life. This is one of the key issues restricting the cycling stability of sulphur-based batteries.

Despite the merits of combining a S cathode and Mg anode, the development of Mg-S batteries is still in an early stage, which is restrained by the unavailability of suitable electrolytes that fulfil the specific requirements for Mg-S battery chemistry. Therefore, there is an ongoing need for developing and providing suitable electrolyte systems enabling a long battery life and cycling stability in multivalent metal batteries, in particular Mg-based batteries such as magnesium-sulphur (Mg-S) batteries.

### PRIOR ART

There are already approaches that deal with these challenges in the development of Mg-based batteries.

Some polymer electrolytes have been reported for the usage in Mg ion batteries. The authors of Adv. Mater. 2019, 31, 1805930*;* ACS Appl. Energy Mater. 2019, 2, 6355-6363 describe their work on the development of polymer electrolytes for magnesium batteries, wherein they use a single-ion conducting magnesium gel polymer electrolyte consisting of a poly(ethylene glycol)dimethacrylate (PEGDMA) crosslinker that is copolymerized with an anionic monomer and subsequently swelled in solvents compatible with magnesium metal. The polymer electrolyte used therein exhibited a large charge transfer resistance due to desolvation of Mg²⁺, and no electrochemical data were provided.

The authors of Adv. Mater. 2019, 31, 1805930 describe a polytetraydrofuran-borate-based polymer electrolyte coupling with glass fibre, synthesized via in *in-situ* crosslinking reaction of Mg(BH₄)₂ and hydroxyl-terminated polytetrahydrofuran and its use in rechargeable Mg-batteries. The systems described therein demonstrated performance in Mg ion batteries but had a limited voltage window (<2.5V), making them unsuitable for Mg-S batteries.

For both approaches a suitability when using a sulphur cathode has not been shown.

The authors of Macromolecules 2018, 51, 21, 8629-8636 describe cross-linked ionomer networks of varying poly(ethylene glycol) diacrylate crosslinker chain length and evaluated the ionic comonomer chemistry and comonomer ratio for their use as polysulfide shuttle inhibiting gel separators in magnesium-sulphur (Mg-S) batteries. The GPE described therein for Mg-S batteries showed limited cation transport and performance in the cell due to interactions between the Mg salt and polymer framework. For the polymers and magnesium salts used therein the performance of only one cycle of the Mg-S battery was reported.

The authors of Energy Storage Materials 48 (2022), 155-163 describe a novel magnesium tetrakis(hexafluoroisopropyloxy)borate-based non-corrosive gel polymer electrolyte, synthesized by an *in-situ* polymerization wherein the GPEs were formed within the pores of glass fiber separators. The authors also refer to approaches using Mg polymer electrolytes based on a combination of polymers including poly(ethylene oxide) (PEO) and copolymer PVDF-HFP with Mg(ClO₄)₂ or MgTFSI₂ salts. As described therein, Cl-based electrolytes are disadvantageous with respect to aniodic stability of the electrolyte system and the corrosive nature of the Cl-based electrolyte. The aim of the work described therein focused on the development of a Cl-free system and resulted in the development of two gel polymer electrolytes based on Mg[B(hfip)₄]₂ salt with either a PTHF backbone or a polymer backbone with polymerized pentaerythritol tetraacrylate (PE-TEA), providing the two GPEs MgBOR-PTHF-GPE and MgBOR-PETEA-GPE. However, the method described therein has the drawbacks, that the risk of polysulfide dissolution during the polymerization process remains, which limits the suitability in Mg-S batteries. Additionally, residual reductive initiators such as Mg(BH₄)₂ bear the risk of limiting the electrochemical window of the electrolyte or to react with sulphur cathode materials.

### OBJECT OF THE INVENTION

It was the object of the invention to provide novel multivalent metal batteries and novel electrolytes for multivalent metal batteries, which avoid the problems described above. It was a further object of the invention to provide novel Mg-based batteries and novel electrolytes for Mg-based batteries. The novel electrolytes should, in particular, be suitable for the use in batteries with sulphur cathodes, e.g. Mg-S batteries, and therefore should be able to suppress the undesired magnesium polysulfide shuttle resulting from the dissolution and diffusion of magnesium polysulfide intermediates and should therewith allow to withstand self-discharge, rapid capacity degradation, and poor cell life. In a further aspect, a novel process for preparing GPEs should be provided, which avoids the occurrence of polysulfide dissolution during polymerization processes and which avoids undesired residual reductive initiators such as Mg(BH₄)₂, which bear the risk of limiting the electrochemical window of the electrolyte or to react with sulphur cathode materials. The novel multivalent metal batteries and novel electrolytes for multivalent metal batteries should comprise Cl-free electrolytes to avoid the above-described disadvantages deriving from chlorine. Further, it was an object of the invention to provide novel multivalent metal batteries exhibiting chemical compatibility with various electrodes and battery components, uniform Mg deposition, and long-term cycling stability. The novel systems should provide an alternative to traditional liquid Mg electrolytes. The novel multivalent metal batteries should exhibit good, ideally improved, cycling stability and battery life. Ideally, the novel multivalent metal batteries should have the potential for large scale battery production with high safety, sustainability, and cost-effectiveness.

The inventors of the present invention developed a novel multivalent metal ion-based gel polymer electrolyte which is able to solve the above mentioned problems and objects of the invention. Therewith, the novel multivalent metal ion-based gel polymer electrolyte turned out to be suitable for the use in multivalent metal batteries, specifically in Mg-based batteries, including Mg-S batteries. The gel polymer electrolyte of the present invention can be prepared in a straightforward manner with the multivalent metal salt using a solvent-casting approach, which avoids the drawbacks of the above-mentioned polymerization techniques. Moreover, the manufacturing process is simple to apply, advantageous for practical applications and can easily be modified for preparing other multivalent ion based systems, such as calcium-GPEs or aluminium-GPEs, allowing to prepare further multivalent metal batteries, such as calcium- and aluminium-based batteries.

The novel gel polymer electrolytes have been shown to exhibit improved cycling performance for up to 300 cycles when incorporated with a sulphur cathode. Surface analysis showed that the gel polymer electrolyte has the ability to suppress the polysulfide shuttle in Mg-S batteries. These findings highlight the potential of the novel gel polymer electrolytes to enhance the lifespan of Mg-S batteries and advance the field of Mg batteries.

The inventors were able to show that, in particular, a novel flexible Mg-GPE according to the present invention is able to suppress the polysulfide shuttle phenomenon and provides efficient Mg-ion transfer, resulting in improved cycling stability and a longer battery life. As a result, with such novel Mg-GPEs, the problems associated with traditional liquid electrolytes in Mg-S batteries can be mitigated, allowing for more reliable and long-lasting energy storage systems.

Therewith, the inventors were able to solve the technical problem of inadequate cycling stability and short battery life in Mg batteries by introducing a novel gel polymer electrolyte that effectively controls the dissolution and diffusion of soluble electrode materials, thereby enhancing the overall performance and lifespan of Mg batteries.

In a further aspect, the inventors surprisingly found, that the novel GPEs according to the invention can be provided in the form of mechanically flexible, self-standing membranes. The self-standing capacity of the membranes exhibits a substantial enhancement in cycle stability, improving from 200 cycles to 300 cycles while maintaining a similar capacity retention. This significant advancement represents a noteworthy achievement for Mg-S batteries. The improved performance can be attributed to the enhanced suppression of the polysulfide shuttle effect facilitated by the self-standing GPE structure. Furthermore, this self-standing GPE exhibits enhanced mechanical flexibility. Therewith, such novel GPE membranes are of particular advantage also for preparing flexible batteries, e.g. for portable electronic devices and flexible electric devices.

### SUMMARY OF THE INVENTION

The present invention includes, without being limited thereto, the following aspects:
[1] Multivalent metal batteries comprising multivalent metal ions (M_{MV}) and a gel polymer electrolyte (GPE), which comprises a poly(vinylidene fluoride-co-hexafluoropropylene) (PVDF-HFP) polymer backbone and a plasticizer.
[2] The multivalent metal batteries according to [1], wherein the plasticizer is selected from polyethylene glycol dimethyl ether (PEGDME), poly(ethylene glycol), cyanoacetic esters, propylene carbonate (PC), succinonitrile, dimethylformamide, imidazolium-based ionic liquids, preferably 1-butyl-3-methylimidazolium bis(trifluoromethanesulfonyl)imide ([C4mim][TFSI]), or mixtures thereof.
[3] The multivalent metal batteries according to [1] or [2], comprising polyethylene glycol dimethyl ether (PEGDME) as a plasticizer, either as the sole plasticizer or in a mixture with a further plasticizer as defined in [1], preferably the multivalent metal batteries comprise PEGDME as the sole plasticizer.
[4] The multivalent metal batteries according to [1] to [3], further comprising additional polymers in mixture with PVDF-HFP, such as preferably polyacrylonitrile (PAN).
[5] The multivalent metal batteries according to [1] to [4], comprising the multivalent metal ions (Me) and the GPE in the form of a flexible membrane (M_{MV}-GPE membrane), wherein the multivalent metal ions are incorporated in the GPE in the form of multivalent metal salts.
[6] The multivalent metal batteries according to [1] to [5], wherein the multivalent metal ions are selected from magnesium, calcium, zinc and aluminium.
[7] The multivalent metal batteries according to [1] to [6], wherein the multivalent metal ions are incorporated in the GPE in the form of a salt selected from a magnesium salt, a calcium salt, and an aluminium salt.
[8] The multivalent metal batteries according to [7], wherein the multivalent metal salt is a magnesium salt or a calcium salt.
[9] The multivalent metal batteries according to [8], wherein the magnesium and calcium salts are selected from magnesium monocarborane (Mg(CB₁₁H₁₂)₂) salt, magnesium hexafluoroisopropylaluminate (Mg[Al(hfip)₄]) salt, magnesium tetra(trifluoroethanoloxy)borate (Mg[B(Otfe)₄]₂) salt, Mg perfluorinated pinacolatoborate Mg[B(O₂C₂(CF₃)₄)₂]₂ (Mg-FPB), magnesium tetrakis(hexafluoroisopropyloxy)borate (Mg[B(hfip)₄]₂) salt, calcium monocarborane (Ca(CB₁₁H₁₂)₂) salt, calcium hexafluoroisopropylaluminate (Ca[Al(hfip)₄]) salt, calcium tetrakis(hexafluoroisopropyloxy)borate (Ca[B(hfip)₄]₂) salt, calcium bis(hexamethyldisilazide) (Ca(HMDS)₂), Ca(PF₆)₂, Ca(BF₄)₂, Ca(TFSI)₂, Ca(OTf)₂, and Ca(FSI)₂.
[10] The multivalent metal batteries according to [1] to [9], wherein the multivalent metal ions are incorporated in the GPE in the form of a magnesium salt which is magnesium tetrakis(hexafluoroisopropyloxy)borate (Mg[B(hfip)₄]₂) salt or in the form of a calcium salt which is calcium tetrakis(hexafluoroisopropyloxy)borate (Ca[B(hfip)₄]₂) salt.
[11] The multivalent metal batteries according to [1] to [10], wherein the multivalent metal ions are incorporated in the GPE in the form of the magnesium salt tetrakis(hexafluoroisopropyloxy)borate (Mg[B(hfip)₄]₂).
[12] The multivalent metal batteries according to [1] to [11], wherein the GPE comprises a solvent entrapped within the polymerized gel network.
[13] The multivalent metal batteries according to [12], wherein the solvent is selected from ethers, selected from 1,2 dimethoxyethane (DME or G1), diglyme (G2), triglyme (G3), and tetraglyme (G4).
[14] The multivalent metal batteries according to [1] to [13], wherein the electrolyte is chloride (Cl)-free.
[15] The multivalent metal batteries according to [1] to [14], which are flexible multivalent metal batteries.
[16] The multivalent metal batteries according to [1] to [15], further comprising an inorganic or organic cathode, preferably soluble electrode materials, which are stable against electrode dissolution in the GPE.
[17] The multivalent metal batteries according to [1] to [16], comprising
   - organic cathode materials selected from poly(anthraquinone), poly(anthraquinonylsulfide), polyimide, benzoquinone, pyrene-4,5,9,10-tetraone (PTO) or
   - inorganic cathode materials selected from a sulphur (S) cathode, MoeSs (Chervel Phase), Prussian Blue Analogues, and metal sulfides like TiS₂, VS₄,
   - metal oxide cathode materials such as V₂O₅, Mn₂O₄, MnO₂,
   - or other cathode materials suitable for Na+ insertion, including compounds like NaMnFe₂(PO₄)₃, NaVOs, Na₂FeP₂O₇ and similar materials; preferably comprising a sulpur (S) cathode.
[18] The multivalent metal batteries according to [1] to [17], which are magnesium-sulphur (Mg-S) batteries.
[19] A multivalent metal ion gel polymer electrolyte membrane (M_{MV}-GPE membrane), comprising multivalent metal ions (Me) incorporated in a gel polymer electrolyte (GPE) which comprises a poly(vinylidene fluoride-co-hexafluoropropylene) (PVDF-HFP) polymer backbone and a plasticizer, preferably a plasticizer as defined in [2] or [3].
[20] The M_{MV}-GPE membrane according to [19], wherein the multivalent metal ions (M_{MV}) are incorporated in the GPE in the form of multivalent metal salts.
[21] M_{MV}-GPE membrane according to [19] or [20], which is a flexible membrane.
[22] The M_{MV}-GPE membrane according to [19] to [21], which is a self-standing membrane.
[23] The M_{MV}-GPE membrane according to [19] to [22], wherein the multivalent metal ions are selected from magnesium, calcium, zinc and aluminium.
[24] The M_{MV}-GPE membrane according to [19] to [23], wherein the multivalent metal ions are incorporated in the GPE in the form of a salt selected from a magnesium salt, a calcium salt, and an aluminium salt.
[25] The M_{MV}-GPE membrane according to [19] to [24], wherein the multivalent metal salt is a magnesium salt or a calcium salt.
[26] The M_{MV}-GPE membrane according to [25], wherein the magnesium and calcium salts are selected from magnesium monocarborane (Mg(CB₁₁H₁₂)₂) salt, magnesium hexafluoroisopropylaluminate (Mg[Al(hfip)₄]) salt, magnesium tetra(trifluoroethanoloxy)borate (Mg[B(Otfe)₄]₂) salt, Mg perfluorinated pinacolatoborate Mg[B(O₂C₂(CF₃)₄)₂]₂, magnesium tetrakis(hexafluoroisopropyloxy)borate (Mg[B(hfip)₄]₂) salt, calcium monocarborane (Ca(CB₁₁H₁₂)₂) salt, calcium hexafluoroisopropylaluminate (Ca[Al(hfip)₄]) salt, calcium tetrakis(hexafluoroisopropyloxy)borate (Ca[B(hfip)₄]₂) salt, calcium bis(hexamethyldisilazide) (Ca(HMDS)₂) ), Ca(PF₆)₂, Ca(BF₄)₂, Ca(TFSI)₂, Ca(OTf)₂, and Ca(FSI)₂.
[27] The M_{MV}-GPE membrane according to [19] to [26], wherein the multivalent metal ions are incorporated in the GPE in the form of a magnesium salt which is magnesium tetrakis(hexafluoroisopropyloxy)borate (Mg[B(hfip)₄]₂) salt or in the form of a calcium salt which is calcium tetrakis(hexafluoroisopropyloxy)borate (Ca[B(hfip)₄]₂) salt.
[28] The M_{MV}-GPE membrane according to [19] to [27], wherein the multivalent metal ions are incorporated in the GPE in the form of the magnesium salt tetrakis(hexafluoroisopropyloxy)borate (Mg[B(hfip)₄]₂).
[29] The M_{MV}-GPE membrane according to [19] to [28], wherein the GPE comprises a solvent entrapped within the polymerized gel network.
[30] The M_{MV}-GPE membrane according to [29], wherein the solvent is selected from ethers, selected from 1,2 dimethoxyethane (DME or G1), diglyme (G2), triglyme (G3), and tetraglyme (G4).
[31] The M_{MV}-GPE membrane according to [19] to [30], wherein the electrolyte is chloride (Cl)-free.
[32] A process for preparing a flexible M_{MV}-GPE membrane according to [19] to [31] by solvent casting, comprising the steps: dissolving the polymer PVDF-HFP, the plasticizer and the multivalent metal in the form of a multivalent metal salt in one or more same or different solvents and providing a dissolution mixture of said components, casting the solution and evaporating the solvent to obtain the M_{MV}-GPE membrane.
[33] The process according to [32], which comprises one or more additional steps of mixing or blending polymers and/or plasticizers, such as a step of co-mixing PVDF-HFP with additional polymers such as PAN and/or a step of blending or mixing selected plasticizers as defined in [2] or [3], preferably of blending PEGDME with one or more additional plasticizer component.
[34] The use of the M_{MV}-GPE membrane according to [19] to [31] in multivalent metal batteries.
[35] The use according to [34] in Mg-, Ca-, Zn- or Al-based multivalent metal batteries, preferably Mg- or Ca-based batteries, more preferably in Mg-based batteries.
[36] The use according to [34] or [35], wherein the multivalent metal batteries comprise a sulphur cathode.
[37] The use according to [36], wherein the multivalent metal batteries are flexible Mg-S batteries.

The present invention is described in more detail as follows.

### DETAILED DESCRIPTION OF THE INVENTION

A first aspect of the invention relates to multivalent metal batteries comprising multivalent metal ions (M_{MV}) and a novel gel polymer electrolyte (GPE) as described in more detail herein below.

A second aspect of the invention relates to the novel gel polymer electrolyte (GPE) as described herein below and which is characterized by comprising a poly(vinylidene fluoride-co-hexafluoropropylene) (PVDF-HFP) polymer backbone, optionally in mixture with additional polymers such as PAN, and a plasticizer. Preferably the GPE of the invention comprises at least polyethylene glycol dimethyl ether (PEGDME) as a plasticizer.

Multivalent metal batteries according to the invention include batteries, based on multivalent metal ions selected from magnesium, calcium, zinc and aluminium, preferably based on magnesium and calcium. In particular, Mg batteries have promising potential as energy storage systems as an alternative to lithium batteries due to their inherent safety, material sustainability, and cost-effectiveness. According to the invention Mg-based batteries are therefore most preferred.

Particularly, in the development of Mg batteries the use of a suitable electrolyte enabling long battery life and cycling stability is of significant importance. Among electrolytes gel polymer electrolytes (GPEs) offer numerous advantages, including chemical compatibility with various electrodes and battery components. With respect to Mg batteries, GPEs further allow uniform Mg deposition, which offers promising alternatives to traditional liquid electrolytes.

The inventors of the present invention developed a novel GPE, which turned out to be particularly suitable as electrolyte not only in Mg-based batteries, but which can also be used in other multivalent metal batteries, including those described herein.

An ideal electrolyte must be compatible with the cathode material and enable reversible multivalent metal deposition simultaneously. When using sulphur as the cathode material, e.g. in Mg-S batteries, the phenomenon of the so-called "polysulfide shuttle" occurs. Therefore, for example, Mg-S batteries are suffering from self-discharge, rapid capacity degradation and poor cell life with liquid electrolytes.

To alleviate these problems, various approaches to tune the electrolyte compositions have been made, including the use of electrolyte additives and/or the development of electrode materials, such as discussed above. However, the issue of active material dissolution in liquid electrolytes remains a crucial challenge. A gel polymer electrolyte with a low solvent content offers a rational option and an alternative approach for the development of future rechargeable multivalent metal batteries. In lithium-sulphur (Li-S) batteries GPEs have already been successfully employed, using the capacity of GPEs to retain a small amount of organic solvents within a polymeric network, which can allow adequate metal ion mobility and at the same time limit the dissolution and diffusion of the soluble polysulfides. However, applying this principle to multivalent metal batteries, the different charge densities of the multivalent metal ions, e.g. in Mg-S batteries the elevated charge density of the Mg²⁺ ion, inherently cause additional challenges, such as finding suitable polymers, solvents, and multivalent metal ion sources for GPEs.

The inventors of the present invention developed novel GPEs on the basis of a poly(vinylidene fluoride-co-hexafluoropropylene) (PVDF-HFP) polymer backbone and a plasticizer, such as preferably polyethylene glycol dimethyl ether (PEGDME). As a widely used polymer base for GPEs, PVDF-HFP possesses advantages such as good wettability in organic electrolytes and film-forming ability. The PVDF-HFP forms the polymer backbone of the GPE and can be used as the sole polymer. It is also possible to blend the PVDF-HFP polymer with other suitable polymers. If mixtures of polymers are used n the GPE of the invention, a preferred mixing partner is polyacrylonitrile (PAN), which also functions as a polymer backbone and can be co-mixed with PVDF-HFP.

Suitable plasticizers to be comprised in the GEPs of the present invention include, polyethylene glycol dimethyl ether (PEGDME), poly(ethylene glycol) and cyanoacetic esters, as well as organic solvents like propylene carbonate (PC), succinonitrile and dimethylformamide. Additionally, ionic liquids such as imidazolium-based ionic liquids like 1-butyl-3-methylimidazolium bis(trifluoromethanesulfonyl)imide ([C₄mim][TFSI]) can also be used as viable plasticizers. The above mentioned group of cyanoacetic esters and of imidazolium based ionic liquids are not specifically limited with respect to their suitability as a plasticizer in the GEPs of the invention, as long as a cyano and an acetate group are present in the cyanoacetic esters and as long as an imidazole ring is present in the cation of the ionic liquid, which are essential to make the compounds suitable as a plasticizer in the GEPs of the invention.

The plasticizers as defined herein exhibit strong interactions with polysulfides, thereby effectively trapping and mitigating the polysulfide shuttle effect described above, which makes them particularly suitable for the GEPs of the present invention. In principle it is possible to use only one plasticizer from the groups and components defined above. It is also possible to use mixtures of two or more plasticizer components as defined herein. Preferably, the GEPs of the present invention comprise at least PEGDME as plasticizer. It is then possible to use only PEGDME as the sole plasticizer, which is most preferred, or to blend or mix PEGDME with one or more additional plasticizer selected from the groups and components defined above. Besides its good polysulfide trapping properties the most preferred plasticizer PEGDME further has a low viscosity, low volatility and low flammability.

By combining PVDF-HFP as the polymer base, optionally co-mixed with other polymers like PAN, with the plasticizers defined herein, preferably with PEGDME, a free-standing mechanically flexible electrolyte membrane can be obtained. Such novel GPEs surprisingly turned out to be chemically compatible with various electrodes and battery components and allow for uniform multivalent metal deposition with long-term cycling stability. The novel GPEs further offer the advantage of providing a chloride (Cl)-free gel polymer electrolyte. Therewith the novel electrolytes do not exhibit corrosive behaviour towards battery components, which is a disadvantage of conventional chloride-containing electrolytes. The multivalent metal batteries according to the invention therefore preferably comprise a gel polymer electrolyte which is chloride (Cl)-free.

In principle, the novel gel polymer electrolytes of the present invention can be used for any type of inorganic and organic cathodes. Preferred are soluble electrode materials. The cathode material should be stable against electrode dissolution in the GPE. Suitable organic cathode materials to be used in the multivalent metal batteries according to the invention can be selected from the group comprising poly(anthraquinone), poly(anthraquinonylsulfide), polyimide, benzoquinone, pyrene-4,5,9,10-tetraone (PTO). Suitable inorganic cathode materials to be used in the multivalent metal batteries according to the invention can be selected from the group comprising a sulphur (S) cathode, MoeSs (Chervel Phase), Prussian Blue Analogues, and metal sulfides like TiS₂, VS₄. Further suitable cathode materials to be used in the multivalent metal batteries according to the invention can be selected from metal oxides such as V₂O₅, Mn₂O₄, MnO₂. Finally, other cathode materials previously used and suitable for Na⁺ insertion can be used, including compounds like NaMnFe₂(PO₄)₃, NaVO₃, Na₂FeP₂O₇ and similar materials. Most preferred according to the invention is a sulpur (S) cathode.

The multivalent metal batteries according to the invention may comprise the multivalent metal ions incorporated in the GPE in the form of multivalent metal salts. In such embodiments the multivalent metal ions (M_{MV}) and the GPE together form a flexible membrane (M_{MV}-GPE membrane).

Suitable multivalent metal salts to be incorporated in the GPE are salts selected from magnesium salts, calcium salts, and aluminium salts. Preferably, the multivalent metal salt is a magnesium salt or a calcium salt.

Suitable magnesium and calcium salts can be selected from the group comprising magnesium monocarborane (Mg(CB₁₁H₁₂)₂) salt, magnesium hexafluoroisopropylaluminate (Mg[Al(hfip)₄]) salt, magnesium tetra(trifluoroethanoloxy)borate (Mg[B(Otfe)₄]₂) salt, Mg perfluorinated pinacolatoborate Mg[B(O₂C₂(CF₃)₄)₂]₂ (Mg-FPB), magnesium tetrakis(hexafluoroisopropyloxy)borate (Mg[B(hfip)₄]₂) salt, calcium monocarborane (Ca(CB₁₁H₁₂)₂) salt, calcium hexafluoroisopropylaluminate (Ca[Al(hfip)₄]) salt, calcium tetrakis(hexafluoroisopropyloxy)borate (Ca[B(hfip)₄]₂) salt, calcium bis(hexamethyldisilazide) (Ca(HMDS)₂), Ca(PF₆)₂, Ca(BF₄)₂, Ca(TFSI)₂, Ca(OTf)₂, and Ca(FSI)₂. Therein, the abbreviation "hfip" indicates a group "OC(H)(CF₃)₂)", the abbreviation "TFSI" incicates a group "N(SO₂CF₃)₂", the abbreviation " Tf" indicates a group "SO₂CF₃" and the abbreviation "FSI" indicates a group "N(SO₂F)₂".

It is preferred that in the multivalent metal batteries or in the M_{MV}-GPE membranes according to the invention the multivalent metal ions are incorporated in the GPE in the form of a magnesium salt which is magnesium tetrakis(hexafluoroisopropyloxy)borate (Mg[B(hfip)₄]₂) salt or in the form of a calcium salt which is calcium tetrakis(hexafluoroisopropyloxy)borate (Ca[B(hfip)₄]₂) salt. It is most preferred that in the multivalent metal batteries or in the M_{MV}-GPE membranes according to the invention the multivalent metal ions are incorporated in the GPE in the form of the magnesium salt tetrakis(hexafluoroisopropyloxy)borate (Mg[B(hfip)₄]₂).

Further, a particularly preferred aspect of the invention relates to multivalent metal batteries comprising the novel GPE as described herein which is a Mg-based battery with a sulphur (S) cathode, i.e. magnesium-sulphur (Mg-S) batteries. In such particularly preferred Mg-S batteries Mg is preferably incorporated in the GPE in the form of magnesium tetrakis(hexafluoroisopropyloxy)borate (Mg[B(hfip)₄]₂) salt.

The most preferred aspect of the invention relates to multivalent metal batteries comprising a GPE which comprises a poly(vinylidene fluoride-co-hexafluoropropylene) (PVDF-HFP) polymer backbone and a polyethylene glycol dimethyl ether (PEGDME) plasticizer, wherein Mg is incorporated in the form of magnesium tetrakis(hexafluoroisopropyloxy)borate (Mg[B(hfip)₄]₂) salt, and which is a Mg-based battery with a sulphur (S) cathode, i.e. a magnesium-sulphur (Mg-S) battery.

As mentioned above, conventional Mg-S batteries face problems related to the formation of magnesium polysulfide intermediates during the electrochemical processes, wherein such intermediates can rapidly dissolve and diffuse into liquid electrolytes, leading to self-discharge, rapid capacity degradation, and poor cell life. With the novel GPEs of the present invention it is now possible to provide new (mechanically) flexible, self-standing GPEs, which avoid these problems, and which turned out to be particularly suitable for the use in Mg-S batteries, when designed as Mg-GPEs by incorporation of a magnesium salt, such as defined above, into the GPE. Such novel Mg-GPEs turned out to be able to suppress the polysulfide shuttle phenomenon and provide efficient Mg-ion transfer, resulting in improved cycling stability and a longer battery life. By using such novel Mg-GPEs according to the invention, the problems associated with conventional liquid electrolytes in Mg-S batteries are mitigated, allowing for more reliable and long-lasting energy storage systems. However, apart from a S cathode, the Mg-GPE can also be used for Mg-batteries with other kinds of soluble electrode materials to inhibit the electrode dissolution and therewith ensure the high-capacity retention of the cells. Regarding such other kinds of soluble electrode materials reference is made to the cathode materials described herein.

In a further aspect of the invention the novel GPE comprises a certain amount of a solvent entrapped within the polymerized gel network. By carrying out ToF-SIMS surface and depth analysis the inventors of the present invention demonstrated that by entrapping solvent molecules within the polymerized gel network of a Mg-GPE the dissolution and migration of polysulfide can effectively be suppressed, showing that with the GPEs according to the invention polysulfide intermediates are effectively immobilized, which allows to reduce self-discharge and to enhance battery performance.

The solvent entrapped in the polymerized gel network is usually the solvent used in the GPE preparation process, and which is left to remain to a certain amount in the polymer network. In principle the solvent can be any solvent, which is suitable in the preparation of gel polymer electrolytes. Examples comprise ethers, such as 1,2 dimethoxyethane (DME or G1), diglyme (G2), triglyme (G3), and tetraglyme (G4).

Accordingly, a further aspect of the invention relates to M_{MV}-GPE membranes as defined anywhere herein. In a most preferred aspect the M_{MV}-GPE membranes of the invention comprise a poly(vinylidene fluoride-co-hexafluoropropylene) (PVDF-HFP) polymer backbone and a polyethylene glycol dimethyl ether (PEGDME) plasticizer, wherein Mg is incorporated in the form of magnesium tetrakis(hexafluoroisopropyloxy)borate (Mg[B(hfip)₄]₂) salt.

A further aspect of the invention relates to a process for preparing the novel M_{MV}-GPE membrane according to the invention. The novel GPEs can be prepared by solvent casting. A suitable solvent casting method comprises the steps:
- dissolving the polymer PVDF-HFP, the plasticizer, preferably PEGDME, and the multivalent metal ions in the form of a multivalent metal salt in a solvent and preparing a dissolution mixture comprising said components,
- casting the solution and
- evaporating the solvent, e.g. by drying, to obtain the M_{MV}-GPE membrane.

In case of using a mixed polymer backbone, e.g. PVDF-HFP co-mixed with PAN, and/or a mixture of two or more plasticizer, the process comprises one or more additional steps of mixing or blending the respective components.

In principle, typical solvent casting methods can be used.

In principle, the PVDF-HFP, the plasticizer, preferably PEGDME, and the multivalent metal salt can each be dissolved separately in the same or different solvents or solvent mixtures and the respective solutions can then be mixed with each other to form a dissolution mixture or dispersion which comprises said three components. It is also possible, that the PVDF-HFP and the multivalent metal salt are together dissolved in a solvent or solvent mixture while the plasticizer, preferably PEGDME, is separately dissolved in the same or a different solvent or solvent mixture and the two solutions are then mixed with each other. Or, the plasticizer, preferably PEGDME, and the multivalent metal salt are together dissolved in a solvent or solvent mixture while the PVDF-HFP is separately dissolved in the same or a different solvent or solvent mixture and the two solutions are then mixed with each other. Alternatively, it is possible that the PVDF-HFP and the plasticizer, preferably PEGDME, are together dissolved in a solvent or solvent mixture while the multivalent metal salt is separately dissolved in the same or a different solvent or solvent mixture and the two solutions are then mixed with each other. It is, however, also possible to dissolve the multivalent metal salt in the plasticizer, preferably in PEGDME, which can act as a solvent, and to dissolve the PVDF-HFP separately in a solvent or solvent mixture and then combine the two mixtures to form the dissolution mixture comprising the three components. This is a preferred way to prepare the M_{MV}-GPE. In case of using mixtures of polymers and/or plasticizer, the additional mixing partners are also dissolved in suitable solvents, either individually or together with their mixing partners or, if applicable, together with the other components which are used to prepare the GEPS.

The resulting final dissolution mixture comprising the three main components (polymer, plasticizer and multivalent metal ions) of the GPE is then subjected to gelation, e.g. left to stand for a certain time until gel formation is completed. Therein, the gel-formation can occur spontaneously when the mixture is left to stand for a certain time (e.g. overnight) or gelation can be triggered by conventional measures. The salt concentration in the electrolyte should be adjusted and maintained at an optimized molar ratio of -CH₂CH₂O-(EO)/M_{MV} ions. For example, in the most preferred Mg-GPE of the invention using a magnesium tetrakis(hexafluoroisopropyloxy)borate (Mg[B(hfip)₄]₂) salt incorporated in the GPE the optimized (EO)/Mg ratio is 30:1.

In the M_{MV}-GPE system according to the invention the -ethoxy (EO) functions as a solvent to promote the dissociation of multivalent metal cations. Meanwhile, the EO groups have high affinities to the liquid electrolyte and effectively entrap solvent molecules and polysulfides in the polymeric framework. The strong solvent-entrapping ability suppresses the leakage, evaporation of the solvent, and creates free space in the M_{MV}-GPE to facilitate ionic motion.

By pouring or casting the mixture or dispersion onto a suitable surface and carrying out one or more drying steps, a M_{MV}-GPE membrane is formed. The pouring or casting of the solution can be carried out by any suitable means. The drying or evaporation step is controlled to provide a M_{MV}-GPE membrane wherein a certain amount of residual solvent remains entrapped in the polymerized gel network.

Therewith, it is possible to prepare self-standing membranes (or foils), which exhibit good mechanical flexibility, as they can be bent without cracking. The membranes can then be processed further, e.g. by cutting, as required for battery assembly.

It is also possible to carry out an additional step of soaking the GPE membrane obtained in the process steps described above. Such soaking step is an extra step after the preparation of the GPE. Immersing the GPE membrane in liquid electrolyte can help to obtain high ionic conductivity and increase the electrochemical performance in the full cell.

Therewith, the GPE membranes according to the invention are particularly suitable for applications in flexible / bendable batteries.

Accordingly, a further aspect of the invention relates to M_{MV}-GPE membranes as defined anywhere herein, which are (mechanically) flexible membranes, and/or which are self-standing membranes, which means that they form a form-stable membrane.

In addition, a further aspect of the invention relates to multivalent metal batteries as defined anywhere herein, which are (mechanically) flexible multivalent metal batteries.

Further aspects of the invention relate to the use of the M_{MV}-GPE membranes as defined anywhere herein in multivalent metal batteries, in particular in Mg-, Ca-, Zn- or Al-based multivalent metal batteries, preferably Mg- or Ca-based batteries, more preferably in Mg-based batteries.

Preferred is the use of the M_{MV}-GPE membranes as defined anywhere herein in multivalent metal batteries which comprise a sulphur cathode, such as preferably in flexible Mg-S batteries.

### EXAMPLES

The invention is described further by the following examples, without being limited thereto.

### Example 1 Mg-GPE and Mg-S battery comprising the Mg-GPE

### 1. Preparation and Characterization

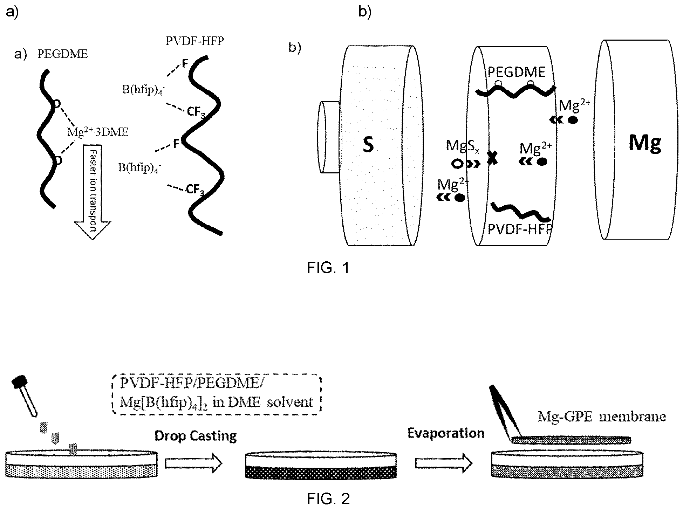

A gel polymer electrolyte membrane according to the invention was prepared, using a magnesium tetrakis(hexafluoroisopropyloxy)borate (Mg[B(hfip)₄]₂) salt and tested for its suitability in a Mg-S battery system. The structure of such Mg-GPE is illustrated in Figure 1a and the structure of a Mg-S battery comprising such Mg-GPE is illustrated in Figure 1b.

The Mg-GPE was prepared using a typical solvent casting method, as illustrated in Figure 2a. The interconnected Mg-GPE structure is illustrated in Figure 2b.

Briefly, the PVDF-HFP and the Mg[B(hfip)₄]₂ salt were separately dissolved in dimethoxy ethane (DME) and PEGDME, respectively, and the solutions were then combined. The salt concentration in the electrolyte was maintained at the optimized molar ratio of -CH₂CH₂O- (EO)/Mg = 30:1. Upon dispersion inside a glovebox overnight, the gelation process occurred spontaneously. In this Mg-GPE system, the EO functions as a solvent to promote the dissociation of Mg salt. Meanwhile, the EO groups have high affinities to the liquid electrolyte and effectively entrap polysulfides and solvent molecules in the polymeric framework. The strong solvent-entrapping ability suppresses the leakage, evaporation of the solvent, and creates free space in the Mg-GPE to facilitate ionic motion.

When pouring the dispersion onto a Petri dish, after several drying steps the Mg-GPE membrane was obtained and further cut into a specific size (16 mm discs) as required for battery assembly. The obtained discs exhibited good mechanical flexibility, as they can be bent without cracking, which makes them suitable for applications in bendable batteries.

Scanning electron microscopy (SEM) and energy dispersive X-ray spectroscopic (EDX) analyses of the obtained Mg-GPE were performed (pictures not shown). The cross-sectional SEM image revealed that the Mg-GPE has an average thickness of about 40 µm, a homogeneous and dense surface, and a uniform distribution of the Mg, C, O and F elements. This structure was expected to be capable of trapping the dissolved electrode material or electrochemical intermediates into the polymer matrix.

Finally, in a additional step, the membrane was soaked in a Mg[B(hfip)₄]₂ / DME (0.4 _{M}) solution before battery assembly inside a glovebox.

FTIR spectroscopy and Raman spectroscopy were employed to investigate the interaction of ions with the host polymer and plasticizer in the gel electrolyte system at the molecular level in comparative FTIR and Raman spectra of the GPE, Mg[B(hfip)₄]₂, PVDF-HFP and PEGDME. The IR spectra revealed a shift related to the B-O-C vibration from 1190 cm⁻¹ to 1181 cm⁻¹ when comparing the spectra of Mg[B(hfip)₄]₂ and the Mg-GPE. This shift indicates that the coordination environment of the [B(hfip)₄]⁻ anion changes upon entrapping in the polymer host. Additionally, a slight shift in the Raman spectra corresponding to the B-O bonds is detected. This shift towards a lower wavenumber in the gel electrolyte, as compared to pristine Mg[B(hfip)₄]₂, serves as additional evidence supporting the presence of an interaction between the polymer and the borate anions. The Raman spectra also indicate that, with the help of the PEGDME plasticizer, the Mg-GPE is highly homogenized with the PVDF-HFP and Mg[B(hfip)₄]₂.

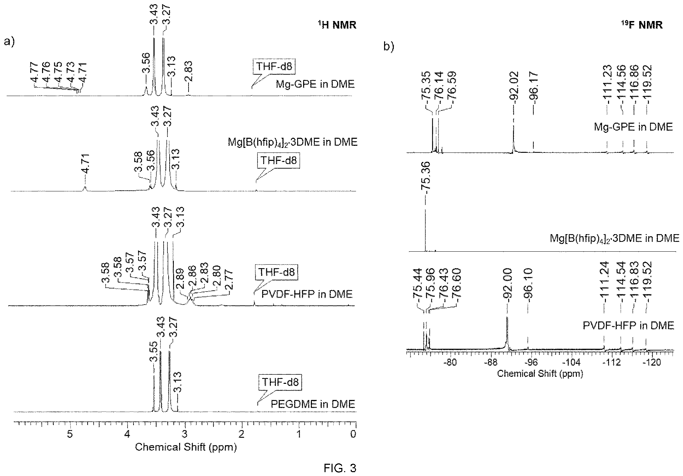

Nuclear magnetic resonance (NMR) spectra further confirmed the observed interactions. Figure 3a shows the NMR spectra of the Mg-GPE and its individual components (Mg[B(hfip)₄]₂ salt, PVDF-HFP and PEGDME), all first dissolved in DME and then mixed with THF-d₈. In the ¹H NMR spectra, there is a signal for the -CH protons of the [B(hfip) ₄]⁻ anions at around 4.71 ppm. From enlarged spectra (not shown), the alterations in the coordination environment of the [B(hfip)₄]⁻ anions can be derived. It is hypothesized that some of the anions may interact with the PVDF-HFP polymer and be fixed in the polymer lattice, causing a loss of the chemical equivalence of the hfip units. The H-F interaction could cause a deshielding effect, which leads to a low-field shift. This explanation matches with the position of the additional signal at around 4.76 ppm. The interactions between the Mg[B(hfip)₄]₂ salt, PVDF-HFP and PEGDME are illustrated in Figure 1a. Additionally, comparable variations in chemical shift were observed in the ¹¹B NMR patterns of the Mg-GPE and Mg[B(hfip)₄]₂ (not shown), providing further confirmation of the modified environment of the [B(hfip)₄]⁻ anions.

As shown in the ¹⁹F NMR (Figure 3b), there are signals at around -76 ppm corresponding to the -CF₃ groups in Mg[B(hfip)₄]₂ and PVDF-HFP. Additional signals for the different types of F in PVDF-HFP appear in the range of -92 to -120 ppm. When comparing the ¹⁹F NMR spectra of PVDF-HFP, Mg[B(hfip)₄]₂ and Mg-GPE, most signals in Mg-GPE exhibit minor shift changes. Besides, the main ¹⁹F NMR signal of Mg[B(hfip)₄]₂ shifts slightly towards high-field in Mg-GPE. This is considered as a consequence of the deshielding effect of the F-F interaction between the [B(hfip) ₄]-anion and the PVDF-HFP polymer. In the case of the PVDF-HFP signals, one part is shifted to high-field, while the other part shifts to low-field. This phenomenon could be explained by F-F and F-O interactions. When the anion is closer to the PVDF-HFP backbone, both interactions could occur. Unlike the F-F interaction, the F-O interaction leads to a shielding effect and, consequently, a low-field-shift. All these results indicate interactions between the periphery of the [B(hfip)₄]⁻ anion and the PVDF-HFP polymer. Due to the beneficial interaction between the [[B(hfip)₄]⁻ anion and the PVDF-HFP polymer, the Mg-ion transfer can be significantly improved within the GPE. When using polymer electrolytes with multivalent ions, a common issue relates to the strong interaction between the polymer and cations, resulting in limited cation mobility. In the new system of the present invention, no significant changes were observed in the coordination environment of the cation when comparing the Mg-GPE and liquid electrolyte.

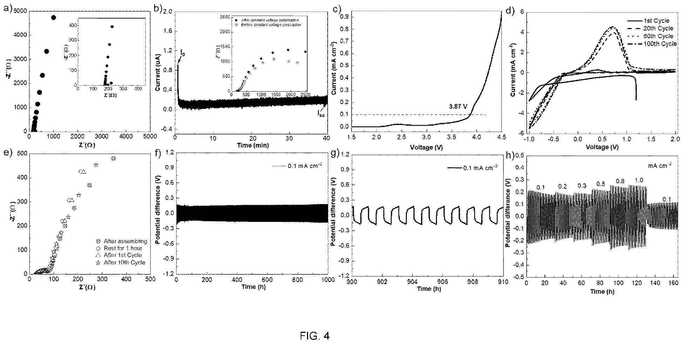

To investigate the ionic conductivity of the Mg-GPE, electrochemical impedance spectroscopy (EIS) was employed using an aluminium (Al) working electrode and magnesium as the counter and reference electrode, as shown in Figure 4a. The conductivity was calculated to be 2.92-10⁻⁵ S cm⁻¹. Another crucial characteristic of an electrolyte, especially for a polymer or solid electrolyte, is the transference number for Mg²⁺ (t_{Mg}²⁺), which quantifies the fraction of ionic transport. The transference number of the Mg-GPE was determined using the steady-state current method described by Bruce and Vincent, [J. Evans, C. A. Vincent, P. G. Bruce, Polymer 1987, 28, 2324-2328]*.* AC impedance measurements were conducted on the cell both before and after the voltage polarization. The interfacial resistances at the electrode-electrolyte interfaces were determined from the Nyquist plots fitting results. The t_{Mg}²⁺ value for the GPE was calculated to be 0.39±0.02, which is notably comparable to those reported for existing polymer electrolytes used in Li-ion batteries. The high transference number could be attributed to the interaction between the [B(hfip)₄]⁻ anion and the gel polymer network, which can hinder the movement of anions while enhancing the Mg²⁺ cation mobility. The electrochemical stability window was measured by linear sweep voltammetry (LSV), as shown in Figure 4c. The current density remains below 0.1 mA cm⁻² up to a voltage of 3.87 V. Cyclic voltammetry (CV) confirmed successful magnesium deposition and stripping on the Mg electrode with the Mg-GPE (Figure 4d). During the initial cycle, there is a conditioning process with low current response, while in the following cycles, the current increased while voltage polarization gradually decreased, indicating faster kinetics and a reversible redox process. Furthermore, to proof that the Mg-GPE allows for successful plating of Mg, plating onto a carbon cloth as the working electrode was demonstrated. For this, a reductive current of 1 mA cm⁻² was applied to a cell with a carbon cloth as working electrode and the Mg-GPE for four hours. From the optical photograph (not shown), the formation of shiny gray particles with metallic appearance was visible on the surface of the carbon cloth. The X-ray diffraction (XRD) pattern obtained for the carbon cloth after deposition can be indexed to standard Mg with a hexagonal structure (not shown). The reflection at around 20° can be attributed to the carbon cloth. Furthermore, the SEM images and EDX maps (not shown) provided confirmation that the Mg particles were tightly packed and agglomerated on the carbon substrate. Figure 4e displays the Nyquist plots of the Mg symmetrical cell with the Mg-GPE measured before and after cycling. The compressed semicircle in the high frequency region of each spectrum is related to the electrode-electrolyte interface impedance, declining after cycling. The low interface resistance can be attributed to the good interfacial compatibility of the Mg-GPE with the electrodes. A galvanostatic cycling test was performed in an Mg symmetrical cell with a current density of 0.1 mA cm⁻². As shown in Figure 4f and 4g, the cell could persevere a low polarization of around 0.10-0.13 V over 1000 cycles. Long-term cycling performance at a high current density of 1.0 mA cm⁻² was also tested. The cyclic stability of the cell remained excellent even at high current density, with an overpotential below 0.3 V even after 500 cycles. The results demonstrate that the Mg-GPE allows for efficient plating and stripping of Mg with small overpotentials, leading to an excellent cycling performance that is comparable to or even better than some Mg liquid electrolytes. Furthermore, a long-time Mg plating/stripping behaviour was achieved in an asymmetrical cell with a plating time of 0.5 h. A consistent Coulombic efficiency of over 90% was achieved after conditioning cycles, which remained stable even after 300 stripping/plating cycles. Figure 4h shows the overpotential values obtained when increasing the current density up to 1.0 mA cm⁻². The deposition/stripping overpotential increased slightly with the areal current densities and became stable after few cycles. Even at a relatively high current density of 1.0 mA cm⁻², the cell could maintain a low polarization of about 0.26 V. The stable electrochemical performances confirm the uniform deposition of Mg with the help of the Mg-GPE.

In addition, the electrochemical performance of the dry Mg-GPE, which refers to the Mg-GPE without soaking into liquid electrolyte, was also tested. An electrochemical stability window of up to 4 V was found, however, the initial stripping/plating process remained challenging. Notably, in the first cycle of the CV curves, there was no distinct redox peak observed when applying a low voltage limit of -1 V. Extending the voltage range to -1.5 V resulted in a weak current response of approximately 0.01 mA cm⁻², which progressively increased in the subsequent cycles up to ten. The observed current response and voltage hysteresis around 4 V during the initial cycle are indicative of sluggish kinetics and insufficient mass transport of Mg²⁺ ions within the dry Mg-GPE. Soaking with liquid electrolyte allowed to improve electrochemical reaction kinetics for the stripping and plating of Mg, enhancing the functioning of the full cell.

Two test cells were assembled with an additional injection of 20 µL Mg polysulfide (MgSₓ) solution to compare the diffusion of polysulfides with different electrolytes. The preparation of the MgSₓ solution and the assembly of the two cells are described further below.

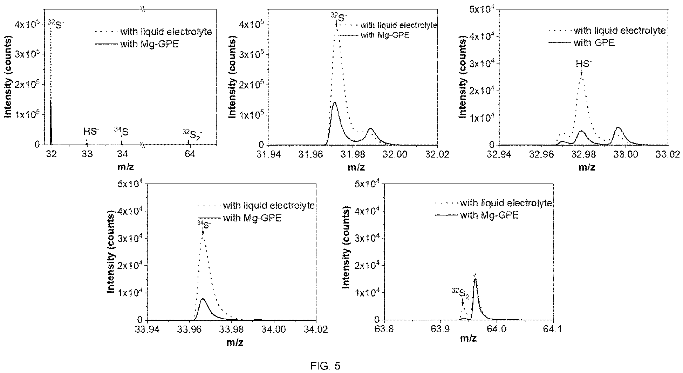

Here, the Mg-GPE (without an additional separator) was used in one cell, while in the other cell a liquid electrolyte (with two pieces of glass fiber separator) was employed. Both cells contained a Mg foil electrode, which was disassembled after 24 hours and examined using time-of-flight secondary ion mass spectrometry (ToF-SIMS) to verify the presence of sulphur. Depth-integrated images and spectra for both samples were analysed, from which it was evident that the intensity of all the signals, including ³²S⁻, HS⁻, ³⁴S⁻, and ³²S₂⁻ fragments from sulphur species, is significantly higher in the electrode with the liquid electrolyte compared to the electrode with the Mg-GPE according to the invention. Interestingly, noticeable spot-like sulphur deposition was observed on the electrode with the liquid electrolyte. This finding aligns with previous reports, suggesting a reaction between dissolved sulphur species and the Mg anode. A quantitative comparison of sulphur content is presented in Figure 5i-m. These results clearly demonstrate that, with the protection of the electrode by the Mg-GPE according to the invention, a much lower amount of sulphur was detected on the electrode. In addition to the ToF-SIMS depth analysis, the ToF-SIMS surface analysis also demonstrated similar results, which further supports the conclusion above. Three different positions were selected on each sample, and the SIMS mapping results for samples with Mg-GPE or liquid electrolyte were analysed and showed that at all selected positions, the sample disassembled from the cell with the liquid electrolyte consistently exhibited higher levels of sulphur species compared to the sample with the Mg-GPE. Overall, ToF-SIMS analyses demonstrated that the Mg-GPE according to the invention and tested herein can effectively suppress the diffusion of polysulfides to the anode side.

To further demonstrate the suppression of polysulfide diffusion by Mg-GPE according to the invention, an H-type glass cell was employed. In this setup, a Mg-GPE according to the invention was used to separate the left and right chambers of the cell. The left chamber was injected with a solution of MgSₓ in tetraglyme, while the right chamber contained pure tetraglyme solvent. After one week, no color was observed in the right chamber. Even after 30 days, the color of the right chamber remained a pale yellow. Despite the significant concentration disparity between the two chambers, no apparent polysulfide diffusion was detected within the cell. This confirmed that the Mg-GPE of the present invention can effectively block polysulfide diffusion.

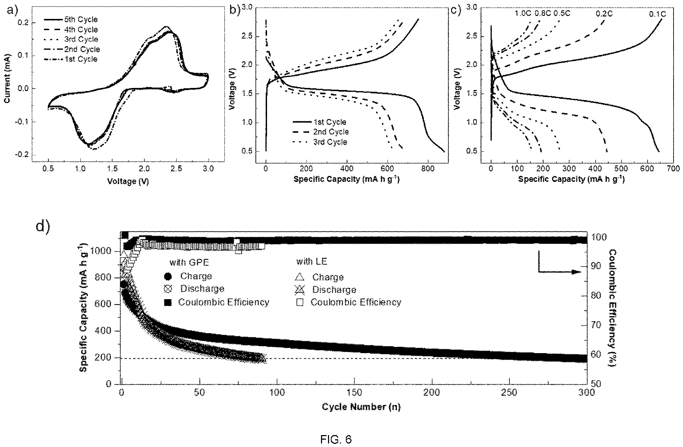

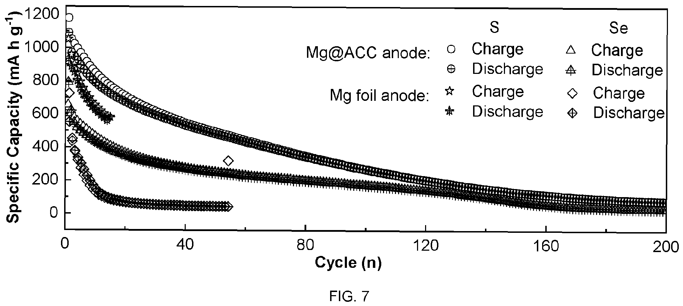

In the next step, the performance of Mg-S batteries with the Mg-GPE according to the invention was investigated by employing a model S/C composite as positive and Mg@ACC as negative electrode material. The S/C electrode was fabricated using a commonly used melt-diffusion method. SEM and EDX mapping images of the S/C electrode (not shown) demonstrated uniform dispersion of sulphur in the porous carbon fibers. Changes in the open circuit voltage (OCV) and corresponding impedances of the cell were investigated by separately monitoring the cathode and anode potentials over a resting period with a three-electrode cell. Here S/C functions as the working electrode (WE), Mg@ACC as the counter electrode (CE), and Mg ring as the reference electrode (RE). After 48 h of rest, the potential change of both the WE and CE was less than 0.1 V. As well-known Mg-S batteries usually suffer from serious self-discharge behaviour with a sharply declining OCV in liquid electrolyte, as described above. In the present experiments the stable OCV validated that the Mg-GPE according to the invention can effectively suppress the dissolution and the diffusion of polysulfide, thus protecting the negative electrode from parasitic reactions of the dissolved sulphur species. Nyquist plots demonstrated the growth trends of both cathode and anode impedance with resting time, which may relate to an adsorption layer formation on the electrode surfaces. Cyclic voltammetry curves of the Mg-S cell are presented in Figure 6a. During the first cathodic scan, the main reduction peak emerged at around 1.25 V, while the oxidation peak appeared at around 2.20 to 2.35 V, which is consistent with the plateaus observed in the charge/discharge profiles (Figure 6b). From the second cycle onwards, the curves overlap, indicating stable charge/discharge behaviour of the system. The reaction kinetics were further investigated through capacity tests at different C-rates (Figure 6c). Due to limited contact between the electrodes and the Mg-GPE (compared to a liquid electrolyte), there is a gap between the low C-rate of 0.2C and the higher one of 0.5C. The cycling performances of Mg-S cells with both Mg-GPE and liquid electrolyte were evaluated and compared at a 0.1C rate (Figure 6d). When using the liquid electrolyte, a higher initial capacity was achieved, which can be attributed to the improved wettability and enhanced electrode-electrolyte contact. However, the capacity exhibited a rapid decline within the first 20 cycles, resulting in a capacity retention below 200 mA h g⁻¹ within 90 cycles. A long-term cycling performance of the Mg-S cell with liquid electrolyte and a Mg foil or a Mg@ACC anode was also carried out (Figure 7).

In contrast, the utilization of Mg-GPE significantly extended the cycle life of the Mg-S cell to 300 cycles, while maintaining a discharge capacity above 200 mA h g⁻¹. As demonstrated in Figure 6e, the majority of the reported Mg-S batteries exhibit high capacities when employing Cl-containing Mg electrolyte. However, the long-term cycling durability of these batteries is limited due to the corrosive nature of Cl⁻ ions, which may affect the compatibility of the electrolytes with conventional metallic current collectors and other battery components. The Cl-free Mg-GPE is able to maintain a comparable capacity retention while significantly extending the lifespan of Mg-S batteries. This high cycling performance is unprecedented. These results make the Mg-GPE a promising candidate for Mg-S batteries and various high-performance energy storage applications.

To further explore the capacity contribution of ACC current collector, coin cells were assembled with ACC and Mg anode. Galvanostatic charge/discharge experiments were performed in a voltage range of 0.5-2.5 V vs. Mg/Mg²⁺ and at a current of 167.5 µA (corresponding to 0.1C with 1 mg sulphur as active material). It was found that ACC exhibits capacitor-like behaviour and can contribute a specific capacity of approximately 40 mA h g⁻¹.

Finally, post-mortem SEM images and EDX maps of the Mg@ACC electrode after cycling with the Mg-GPE were analyzed. The SEM images indicated that the structure of the Mg@ACC electrode was maintained. On its surface that was in direct contacted with the Mg-GPE of the invention, there was a slight change in the morphology of the Mg metal, indicating a shift in the growth orientation of Mg due to the influence of the Mg-GPE. Additionally, no extra sulphur signal was detected via EDX, confirming the effective suppression of polysulfide shuttle by the Mg-GPE according to the invention.

### 2. Conclusion

In the present Example a free-standing Mg-GPE according to the invention was prepared using a solvent-casting method and tested with respect to its suitability for long-cycle Mg batteries. The Mg-GPE tested herein not only enables a uniform deposition of Mg, but also effectively inhibits the dissolution and diffusion of electrochemical reaction intermediates. In the symmetric cell with the Mg-GPE, a stable plating/stripping behaviour of Mg was observed over 1000 cycles. In an Mg-S battery with the Mg-GPE, remarkable and unprecedented stability over 300 cycles resulted with a retained capacity of 200 mA h g⁻¹. This significant enhancement in stability supports that GPEs according to the invention offer a promising solution for solving the current limitations of Mg-S batteries and the objects of the invention described above. Moreover, it also paves the way for the development of next-generation RMBs with high performance, superior safety and enhanced mechanical flexibility.

A comparison of the results achieved with the Mg-GPE according to the invention with conventional liquid electrolytes according to the prior art [ACS Energy Lett. 2018, 3, 2005-2013*;* ACS Appl. Energy Mater. 2023, 6, 1008-1018*],* shown in Figure 7, further confirms the superiority of the novel GPEs of the invention.

### 3. Experimental Set-up

### Mg-based gel polymer electrolyte (Mg-GPE) synthesis:

Commercially available poly(vinylidene fluoride-co-hexafluoropropylene) (PVDF-HFP, Aldrich, average M_{w} of 400000 g mol⁻¹) and polyethylene glycol dimethyl ether (PEGDME, Aldrich, average M_{w} of 500 g mol⁻¹) were used as received. Anhydrous dimethoxy ethane (DME, Sigma) was stored over 3 Å molecular sieves in a glove box overnight before use. The magnesium tetrakis(hexafluoroisopropyloxy)borate Mg[B(hfip)₄]₂ electrolyte was synthesized through a reaction between Mg(BH₄)₂ and hexafluoroisopropanol ((CF₃)₂CHOH, 99%, Alfa Aesar) in DME, as described in [Z. Zhao-Karger, R. Liu, W. Dai, Z. Li, T. Diemant, B. P. Vinayan, C. Bonatto Minella, X. Yu, A. Manthiram, R. J. Behm, M. Ruben, M. Fichtner, ACS Energy Lett. 2018, 3, 2005-2013*].* A 0.4 _{M} liquid electrolyte solution was prepared by dissolving the appropriate amount of magnesium salt in DME; with the concentration based on the molecular weight of Mg[B(hfip)₄]₂·3DME.

Free-standing polymer electrolyte films were prepared by solution casting in an argon-filled glove box. Firstly, 400 mg PVDF-HFP were dissolved in 3 mL DME and stirred intensely at 80 °C for four hours (= solution A). The Mg[B(hfip)₄]₂·3DME salt was dissolved into PEGDME (= solution B) at a ratio of 30 ethoxy (EO) units per Mg²⁺ cation.

Solution B was then added to solution A and stirred for 30 minutes to form the final gel solution. The gel solution was cast into a Petri dish (6 cm diameter) at room temperature for 12 h to evaporate the bulk solvent and further dried at 80 °C for another 12 h. The weight ratio of PVDF-HFP within the GPE membrane is 22.4%. Finally, the resulting polymer film was cut into discs with a diameter of 16 mm (for coin cell) or 22 mm (for three-electrode cell) and infiltrated with 0.4 _{M} Mg[B(hfip)₄]₂·3DME in DME liquid electrolyte overnight before use.

### Preparation of Mg@ACC electrode:

A galvanostatic electrodeposition method was used to prepare Mg@ACC electrodes as reported in [L. Wang, T. Diemant, Z. Li, B. Dasari, Z. Zhao-Karger, ACS Appl. Energy Mater. 2023, 6, 1008-1018*].* Before the electrodeposition process, the activated carbon cloth (ACC-507-20, Kynol Europa GmbH) was cut into discs with a diameter of 13 mm and vacuum-dried at 230 °C overnight. CR2032-type coin cells were assembled to deposit Mg on the ACC. The coin cells consisted of an Mg foil as the counter/reference electrode, two pieces of polypropylene monolayer separator (Celgard 2500) in between and a piece of ACC as the working electrode. The smooth surface of the Celgard separator ensures easy peel-off after electrodeposition. Prior to cell assembly, the Mg foil (0.1 mm, Gelon Energy Corp) was cut into discs with a 14 mm diameter and carefully scratched on both sides in the glovebox to remove the native oxide layer from its surface. The electrodeposition was performed at a discharge current density of 1 mA cm⁻² for four hours and stabilized at approximately 0.25 V vs. Mg²⁺ /Mg in the electrolyte containing 0.4 _{M} Mg[B(hfip)₄]₂·3DME in DME.

Then Mg@ACC electrode was obtained by disassembling the coin cells after the electrodeposition process and used as the negative electrode in all the cells tested in this Example.

### Preparation of magnesium polysulfides (MgSₓ) solution:

2.053 g (64.0 mmol) of elemental sulphur powder (99.98%, Sigma-Aldrich) and 0.194 g (8.0 mmol) of Mg crumbs scratched off an Mg foil were added to a glass vial and mixed with 30 ml of tetraglyme in a glove box. The suspension was stirred at 60 °C for three days. Finally, the suspension was filtered, and the filtrate reddish polysulfide solution was used for H-cell testing.

### Preparation of the S/C electrode:

The preparation of S/C composite was carried out according to previously published protocols. [Z. Meng, D. Foix, N. Brun, R. Dedryvère, L. Stievano, M. Morcrette, R. Berthelot, ACS Energy Lett. 2019, 4, 2040-2044*;* T. Gao, S. Hou, F. Wang, Z. Ma, X. Li, K. Xu, C. Wang, Angew. Chem. Int. Ed. 2017, 56, 13526-13530]*.* The activated carbon cloth was first cut into circular discs with a diameter of 10 mm and dried under vacuum at 230 °C overnight. Elemental sulphur powder was homogeneously dispersed on the carbon discs. The discs were then transferred to a glass tube with a diameter of 1 cm, which was subsequently sealed under vacuum and heated to 160 °C for 16 hours. The sulphur loading was calculated by subtracting the mass of the blank activated carbon cloth from the mass of the loaded electrode to be, around 1.0 mg cm⁻².

### 4. Characterization

X-ray diffraction (XRD) measurements were conducted on a STOE STADI diffractometer with a Mo Kα X-ray source operated at 50 kV and 40 mA in the range of 10° to 40°. Scanning Electron Microscopy (SEM) images were obtained using a ZEISS LEO 1530 at 10 kV electron beam with energy dispersive X-ray spectroscopy (EDX). The SEM samples were prepared on carbon tapes. IR characterization was performed inside the glovebox using a FT-IR microspectroscopy (Nicolet iS50). Measurements were collected in the range between 4000 and 500 cm⁻¹ at room temperature. ¹H, ¹¹B and ¹⁹F nuclear magnetic resonance (NMR) spectra were measured on a Bruker Advance II 500 spectrometer. THF-ds was used as solvent for NMR measurements, and the chemical shifts are reported in ppm using one residual solvent peak at 1.73 ppm as the reference. Raman measurements were carried out with a confocal Raman microscope (InVia, Renishaw) in the spectral range of 200-3200 cm⁻¹ using a 532 nm laser excitation source. Time-of-Flight Secondary Ion Mass Spectrometry (ToF-SIMS) was performed on a TOF-SIMS5 instrument (ION-TOF GmbH) equipped with a Bi cluster primary ion source and a reflectron type time-of-flight analyzer. UHV base pressure was < 2×10 -8 mbar. For high mass resolution the primary ion source was operated in "high current bunched" mode providing short Bi³⁺ primary ion pulses for static SIMS imaging or Bi⁺ for depth profiling (25 keV). The short pulse length of 1.0 ns allowed for high mass resolution. The primary ion beam was scanned across a 500×500 µm² field of view on the sample, and 128×128 data points were recorded. Primary ion doses were kept below 10¹¹ ions/cm² (static SIMS limit). Spectra were calibrated on the omnipresent C⁻, CH⁻, CH₂⁻, C₂⁻, S⁻ peaks. For depth profiling a dual beam analysis was performed in interlaced mode: The primary ion source was again operated in "high current bunched" mode with a scanned area of 500 × 500 µm² and a sputter gun (operated with Cs⁺ ions, 2 keV, scanned over a concentric field of 750 ×750 µm², target current 135 - 157 nA) was applied to erode the sample up to a total fluence of > 1.1×10¹⁷ ions/cm² passing through the surface layer on the samples.

### 5. Electrochemical measurements

The CR2032 coin cells and three-electrode cells (PAT-Cell, EL-CELL) were assembled in an argon-filled glove box (H₂O, O₂ < 0.1 ppm). The glass fiber ((GF/C) from Whatman) membranes were vacuum dried at 230 °C overnight and were used as separator. Symmetric and asymmetric cells were employed to evaluate the cycling stability and cycle lifespan of the negative electrodes. During the electrochemical process, Mg was continuously plated or stripped at a current density of 0.1 mA cm⁻². Electrochemical impedance spectroscopy (EIS) was carried out on an electrochemical workstation (VMP-3 Biologic) from 1 MHz to 20 mHz with a DC voltage amplitude of 10 mV.

Two coin cells were assembled for the ToF-SIMS test, with Mg foil serving as the negative electrode and a stainless steel current collector as the positive electrode. Between the electrodes, one cell had a Mg-GPE membrane, while the other cell had two pieces of glass fiber separators (Whatman GF/C) along with 80 µL 0.4 _{M} Mg[B(hfip)₄]₂·3DME in DME liquid electrolyte. Additionally, 20 µL of MgSₓ solution was injected into both cells. Both cells were kept 24 h inside glovebox before the ToF-SIMS test.

For the Mg-S coin cells, galvanostatic charge/discharge experiments were performed in a voltage range of 0.5-2.7 V vs. Mg/Mg²⁺ and at a C-rate of 0.1C (S: 1C = 1675 mA g⁻¹). Cyclic voltammetry (CV) measurements were carried out at a scan rate of 0.1 mV s⁻¹ in a voltage range of 0.5-3.0 V vs. Mg/Mg²⁺ on a Biologic VMP-3 potentiostat. All electrochemical investigations were conducted at 25 °C.

### DESCRIPTION OF THE FIGURES

- Fig. 1: a) Schematic illustration of the PVDF-HFP/PEGDME/Mg[B(hfip)₄]₂ gel polymer electrolyte structure and the interactions between anions and polymer structures.
b) Schematic illustration of a Mg-S battery system with a PVDF-HFP/PEGDME/ Mg[B(hfip)₄]₂ GPE according to the invention.
- Fig. 2: Schematic illustration of the preparation process of the PVDF-HFP/PEGDME/Mg[B(hfip)₄]₂ gel polymer electrolyte.
- Fig. 3: a) ¹H NMR (500 MHz, THF-d₈) spectra of Mg-GPE, Mg[B(hfip)₄]₂·3DME, PVDF-HFP and PEGDME.
b) ¹⁹F NMR (500 MHz, THF-d₈) spectra of Mg-GPE, Mg[B(hfip)₄]₂·3DME and PVDF-HFP.
- Fig. 4: a) Electrical impedance spectroscopy of a symmetric AI//Mg-GPE//AI cell at 25°C. The inset shows enlarged profiles in the high-frequency region.
b) DC polarization curve of the Mg symmetrical cell with a total applied potential difference of 10 mV (Inset: Nyquist plots of the symmetrical cell before and after DC polarization).
c) Linear sweep voltammogram of an AI//Mg-GPE//Mg cell; scan rate of 1 mV s⁻¹.
d) Cyclic voltammetry curves for Mg plating and stripping in the Mg-GPE; sweep rate of 5 mV s⁻¹.
e) Nyquist plots of the symmetrical Mg//Mg-GPE//Mg cell with GPE before cycling, after the 1^{st} and 10^{th} cycles.
f) Long-term cycling of symmetrical Mg//Mg-GPE//Mg cell using Mg-GPE.
g) enlarged profiles at the 900^{th} to 910^{th} cycles; current density is 0.1 mA cm⁻², and 0.05 mA h cm⁻² Mg is plated and stripped per cycle.
h) Polarization properties of symmetrical Mg//Mg-GPE//Mg cell at various current densities (0.1 mA cm⁻² to 1.0 mA cm⁻²); plating/stripping time of 0.5 h.
- Fig. 5: ToF-SIMS depth integrated spectra of the ions related to sulfur species on the surface of an electrode with a GPE according to the invention compared to an electrode with a liquid electrolyte after 24 h resting; dot: liquid electrolyte; line: GPE.
- Fig. 6: a) CVs of an Mg-S coin cell at a scan rate of 0.1 mV s⁻¹ for the first five cycles.
b) Galvanostatic discharge/charge curves of the Mg-S cell for the first three cycles.
c) Rate performance of Mg-S cell at C-rates of 0.1C, 0.2C, 0.5C, 0.8C and 1C.
d) Comparison of cycling performance of cells with Mg-GPE and 0.4 _{M} Mg[B(hfip)₄]₂·3DME in DME liquid electrolyte at 0.1C.
- Fig. 7: Electrochemical Performance of conventional liquid electrolytes according to the prior art ACS Appl. Energy Mater. 2023, 6, 1008-1018

## Claims

1. Multivalent metal batteries comprising multivalent metal ions (Me) and a gel polymer electrolyte (GPE), which comprises a poly(vinylidene fluoride-co-hexafluoropropylene) (PVDF-HFP) polymer backbone and a plasticizer.

2. The multivalent metal batteries according to claim 1, wherein the plasticizer is selected from polyethylene glycol dimethyl ether (PEGDME), poly(ethylene glycol), cyanoacetic esters, propylene carbonate (PC), succinonitrile, dimethylformamide, imidazolium-based ionic liquids, preferably 1-butyl-3-methylimidazolium bis(trifluoromethanesulfonyl)imide ([C4mim][TFSI]), or mixtures thereof; preferably the plasticizer is polyethylene glycol dimethyl ether (PEGDME) as the sole plasticizer or in a mixture with a further plasticizer, more preferably PEGDME is the sole plasticizer.

3. The multivalent metal batteries according to claim 1 or 2, further comprising additional polymers in mixture with PVDF-HFP, preferably comprising PVDF-HFP co-mixed with polyacrylonitrile (PAN).

4. The multivalent metal batteries according to claims 1 to 3, comprising the multivalent metal ions (Me) and the GPE in the form of a flexible membrane (M_{MV}-GPE membrane), wherein the multivalent metal ions are incorporated in the GPE in the form of multivalent metal salts.

5. The multivalent metal batteries according to claims 1 to 4, wherein the multivalent metal ions are selected from magnesium, calcium, zinc and aluminium, preferably magnesium and calcium.

6. The multivalent metal batteries according to claims 1 to 5, wherein the multivalent metal ions are incorporated in the GPE in the form of a salt selected from a magnesium salt or a calcium salt, wherein
magnesium salts are selected from magnesium monocarborane (Mg(CB₁₁H₁₂)₂) salt, magnesium hexafluoroisopropylaluminate (Mg[Al(hfip)₄]) salt, magnesium tetra (trifluoroethanoloxy)borate (Mg[B(Otfe)₄]₂) salt, Mg perfluorinated pinacolatoborate Mg[B(O₂C₂(CF₃)₄)₂]₂ (Mg-FPB), and magnesium tetrakis (hexafluoroisopropyloxy) borate (Mg[B(hfip)₄]₂) salt, and
calcium salts are selected from calcium monocarborane (Ca(CB₁₁H₁₂)₂) salt, calcium hexafluoroisopropylaluminate (Ca[Al(hfip)₄]) salt, calcium tetrakis(hexafluoroisopropyloxy)borate (Ca[B(hfip)₄]₂) salt, calcium bis(hexamethyldisilazide) (Ca(HMDS)₂), Ca(PF₆)₂, Ca(BF₄)₂, Ca(TFSI)₂, Ca(OTf)₂, and Ca(FSI)₂;
preferably the magnesium salt is magnesium tetrakis(hexafluoroisopropyloxy)borate (Mg[B(hfip)₄]₂) salt and the calcium salt is calcium tetrakis(hexafluoroisopropyloxy) borate (Ca[B(hfip)₄]₂) salt.

7. The multivalent metal batteries according to claims 1 to 6, wherein the GPE comprises a solvent entrapped within the polymerized gel network, preferably a solvent selected from ethers, selected from 1,2 dimethoxyethane (DME or G1), diglyme (G2), triglyme (G3), and tetraglyme (G4).

8. The multivalent metal batteries according to claims 1 to 7, further comprising an inorganic or organic cathode, preferably soluble electrode materials, which are stable against electrode dissolution in the GPE, more preferably
comprising
• organic cathode materials selected from poly(anthraquinone), poly(anthra-quinonylsulfide), polyimide, benzoquinone, pyrene-4,5,9,10-tetraone (PTO);
• inorganic cathode materials selected from a sulphur (S) cathode, MosSs (Chervel Phase), Prussian Blue Analogues, and metal sulfides like TiS₂, VS₄;
• metal oxide cathode materials such as V₂O₅, Mn₂O₄, MnO₂; or
• cathode materials suitable for Na+ insertion such as NaMnFe₂(PO₄)₃, NaVOs, Na₂FeP₂O₇;
preferably comprising a sulpur (S) cathode.

9. The multivalent metal batteries according to claims 1 to 8, which are magnesium-sulphur (Mg-S) batteries.

10. A multivalent metal ion gel polymer electrolyte membrane (M_{MV}-GPE membrane), comprising multivalent metal ions (/M_{MV}) incorporated in a gel polymer electrolyte (GPE) which comprises a poly(vinylidene fluoride-co-hexafluoropropylene) (PVDF-HFP) polymer backbone and a plasticizer, preferably polyethylene glycol dimethyl ether (PEGDME).

11. The M_{MV}-GPE membrane according to claim 10, wherein the multivalent metal ions (M_{MV}) are incorporated in the GPE in the form of a salt selected from a magnesium salt or a calcium salt, wherein
magnesium salts are selected from magnesium monocarborane (Mg(CB₁₁H₁₂)₂) salt, magnesium hexafluoroisopropylaluminate (Mg[Al(hfip)₄]) salt, magnesium tetra (trifluoroethanoloxy)borate (Mg[B(Otfe)₄]₂) salt, Mg perfluorinated pinacolatoborate Mg[B(O₂C₂(CF₃)₄)₂]₂ (Mg-FPB), and magnesium tetrakis(hexafluoroisopropyloxy) borate (Mg[B(hfip)₄]₂) salt, and
calcium salts are selected from calcium monocarborane (Ca(CB₁₁H₁₂)₂) salt, calcium hexafluoroisopropylaluminate (Ca[Al(hfip)₄]) salt, calcium tetrakis(hexafluoroisopropyloxy)borate (Ca[B(hfip)₄]₂) salt, calcium bis(hexamethyldisilazide) (Ca(HMDS)₂), Ca(PF₆)₂, Ca(BF₄)₂, Ca(TFSI)₂, Ca(OTf)₂, and Ca(FSI)₂;
preferably the magnesium salt is magnesium tetrakis(hexafluoroisopropyloxy)borate (Mg[B(hfip)₄]₂) salt and the calcium salt is calcium tetrakis(hexafluoroisopropyloxy) borate (Ca[B(hfip)₄]₂) salt.

12. The M_{MV}-GPE membrane according to claim 10 or 11, which is a flexible membrane.

13. The M_{MV}-GPE membrane according to claims 10 to 12, wherein the GPE comprises a solvent entrapped within the polymerized gel network, preferably a solvent selected from ethers, selected from 1,2 dimethoxyethane (DME or G1), diglyme (G2), triglyme (G3), and tetraglyme (G4).

14. A process for preparing a flexible M_{MV}-GPE membrane according to claims 10 to 13 by solvent casting, comprising the steps: dissolving the polymer PVDF-HFP, the plasticizer, preferably PEGDME, and the multivalent metal ions in the form of a multivalent metal salt in one or more same or different solvents, optionally co-mixing additional polymers and/or plasticizer, and providing a dissolution mixture of said components, casting the solution and evaporating the solvent to obtain the M_{MV}-GPE membrane.

15. The use of the M_{MV}-GPE membrane according to claims 10 to 13 in multivalent metal batteries, preferably in Mg- or Ca-based batteries, more preferably in Mg-based batteries, wherein the multivalent metal batteries preferably comprise a sulphur cathode, and wherein more preferably the multivalent metal batteries are flexible Mg-S batteries.
